# EUROPÄISCHE PATENTSCHRIFT

(11) **EP 1 429 254 B1**
(45) Veröffentlichungstag und Bekanntmachung des Hinweises auf die Patenterteilung: **14.03.2007**
(21) Anmeldenummer: 02027484.1
(22) Anmeldetag: 10.12.2002
(51) Int. Cl.: G06F 13/24, H04L 29/06

(54) **Interrupt-Behandlung in einem CAN-Knoten**
Interrupt handling in a CAN node
Traitement d'interruptions dans un noeud CAN

(43) Veröffentlichungstag der Anmeldung: 16.06.2004
(73) Patentinhaber: Infineon Technologies AG, 81669 München (DE)
(72) Erfinder: Vowe, Achim, Dr., 80469 München (DE); Herz, Karl, 81735 München (DE)
(74) Vertreter: Repkow, Ines

(56) Entgegenhaltungen:
- EP-A- 1 085 722
- US-A- 4 734 882
- US-A- 5 862 389

## Beschreibung

Die vorliegende Erfindung betrifft einen CAN-Knoten gemäß dem Oberbegriff des Patentanspruchs 1.

Ein CAN-Knoten ist Bestandteil eines CAN, genauer gesagt eine an einen CAN-Bus angeschlossene Einrichtung. CAN steht für Controller Area Network, welches ein seit vielen Jahren bekanntes und weit verbreitetes Netzwerk zur Verbindung von dezentral angeordneten Einrichtungen ist.

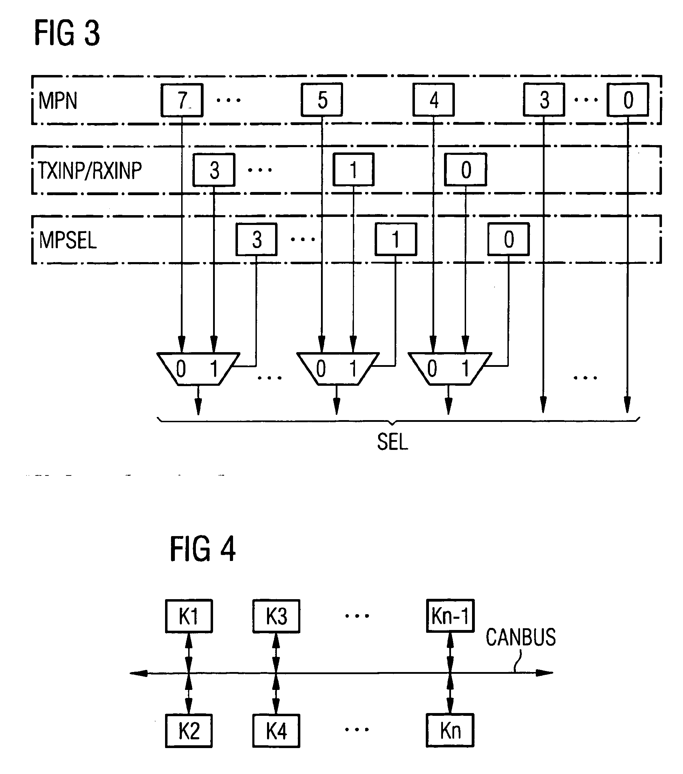

Der prinzipielle Aufbau eines CAN ist in Figur 4 veranschaulicht.

Die in der Figur 4 gezeigte Anordnung besteht aus einem (CAN-)Bus CANBUS und daran angeschlossenen (CAN-)Knoten K1 bis Kn.

Jeder der Knoten K1 bis Kn kann über den Bus CANBUS Daten zu einem oder mehreren anderen Knoten übertragen und/oder Daten von anderen Knoten empfangen. Die Übertragung der Daten erfolgt in Einheiten von sogenannten Messages.

Bezüglich des Aufbaus einer Message, sowie bezüglich der vorstehend und nachfolgend nicht erwähnten Besonderheiten eines CAN wird auf den ISO-Standard 11898 verwiesen.

Die Knoten K1 bis Kn können, müssen aber nicht, durch einen Mikrocontroller gebildet werden.

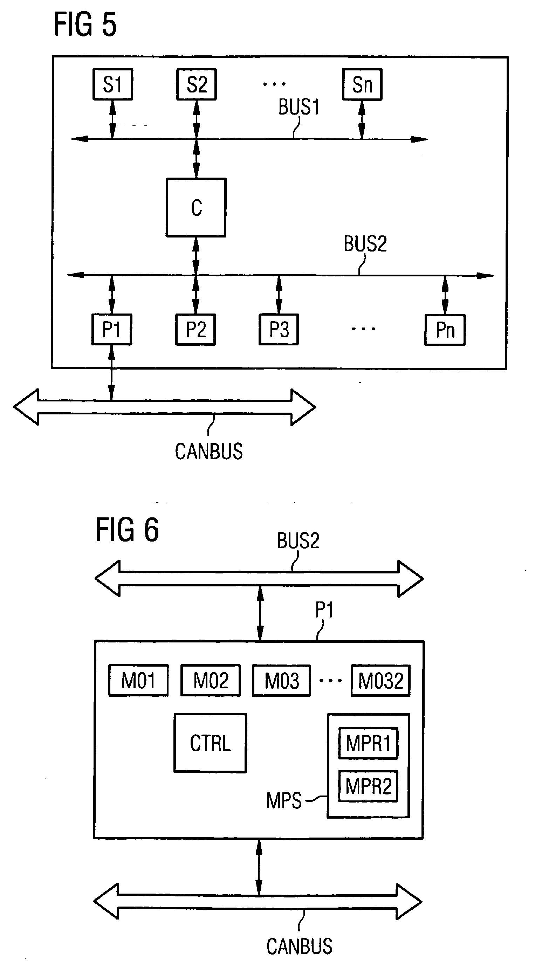

Der Aufbau eines als CAN-Knoten verwendbaren Mikrocontrollers ist in Figur 5 veranschaulicht.

Der gezeigte Mikrocontroller enthält eine CPU C, Speichereinrichtungen S1 bis Sn, und Peripherieeinheiten P1 bis Pn, wobei die CPU C und die Speichereinrichtungen S1 bis Sn über einen ersten Bus BUS1 miteinander verbunden sind, und wobei die CPU C und die Peripherieeinheiten P1 bis Pn über einen zweiten Bus BUS2 miteinander verbunden sind.

Die Speichereinrichtungen S1 bis Sn können beispielsweise ein RAM, einen Flash-Speicher und ein ROM umfassen.

Die Peripherieeinheit P1 ist ein CAN-Controller, und die Peripherieeinheiten P2 bis Pn können beispielsweise einen DMA-Controller, einen A/D-Wandler, einen D/A-Wandler, einen USB-Controller und/oder sonstige in Mikrocontroller integrierbare Komponenten umfassen.

Der CAN-Controller P1 ist mit dem CAN-Bus CANBUS verbunden. Er gibt vom Mikrocontroller auf den CAN-Bus auszugebende Daten auf den CAN-Bus aus, und empfängt über den CAN-Bus übertragene und vom Mikrocontroller benötigte bzw. für den Mikrocontroller bestimmte Daten.

Der prinzipielle Aufbau des CAN-Controllers ist in Figur 6 gezeigt.

Der gezeigte CAN-Controller enthält eine Steuereinrichtung CTRL, 32 Message Objects MO1 bis MO32, und einen Message-Pending-Speicher MPS, wobei der Message-Pending-Speicher MPS durch ein erstes Message Pending Register MPR1 und ein zweites Message Pending Register MPR2 gebildet wird.

Die Message Objects MO1 bis MO32 sind beispielsweise durch Teile eines RAM gebildete Speicherbereiche, und dienen zum Zwischenspeichern von auf den CAN-Bus auszugebenden Daten, und/oder zum Zwischenspeichern von über den CAN-Bus übertragenen und vom Mikrocontroller benötigten oder für den Mikrocontroller bestimmten Daten.

Wenn der Mikrocontroller, genauer gesagt eine der Komponenten des Mikrocontrollers über den CAN-Bus Daten an einen der anderen Knoten des CAN übertragen möchte, schreibt die betreffende Mikrocontroller-Komponente diese Daten in eines der Message Objects. Welches Message Object hierfür verwendet wird, hängt insbesondere von der Information ab, die durch die betreffenden Daten repräsentiert wird, und/oder von der Priorität, mit welcher die Daten auf den CAN-Bus auszugeben sind. Die Steuereinrichtung CTRL durchsucht fortlaufend oder in gewissen (regelmäßigen oder unregelmäßigen) zeitlichen Abständen die Message Objects, um zu ermitteln, ob und gegebenenfalls in welchen Message Objects sich Daten befinden, die auf den CAN-Bus auszugeben sind. Wenn in mehreren Message Objects auf den CAN-Bus auszugebende Daten gespeichert sind, ermittelt die Steuereinrichtung CTRL zusätzlich, in welchem Message Object die Daten gespeichert sind, die als erste auszugeben sind. Anschließend liest die Steuereinrichtung CTRL diese Daten aus dem betreffenden Message Object aus, setzt diese Daten zusammen mit weiteren Daten zu einer Message zusammen, und gibt diese Message auf den CAN-Bus aus.

Die Steuereinrichtung CTRL überprüft ferner, ob in den über den CAN-Bus übertragenen Messages Daten enthalten sind, die von dem die Steuereinrichtung enthaltenden Knoten benötigt werden oder für diesen Knoten bestimmt sind. Falls eine solche Message gefunden wird, werden die in der Message enthaltenen Daten in eines der Message Objects geschrieben. In welches Message Object die Daten geschrieben werden, hängt von der durch die Daten repräsentierten Information, genauer gesagt dem Inhalt des Identifier-Feldes der Message ab.

Jedes Mal, nachdem in einem Message Object gespeicherte Daten aus dem Message Object ausgelesen und auf den CAN-Bus ausgegeben wurden, und jedes Mal, wenn ein Message Object mit über den CAN-Bus übertragenen Daten beschrieben wurde, veranlaßt die Steuereinrichtung CTRL, daß bestimmte, im folgenden als Nachbearbeitungs-Schritte bezeichnete Operationen ausgeführt werden.

Die Nachbearbeitungs-Schritte, die auszuführen sind, nachdem die in einem Message Object gespeicherten Daten aus dem Message Object ausgelesen und auf den CAN-Bus ausgegeben wurden, umfassen zumindest, daß das betreffende Message Object zur erneuten Benutzung freigegeben wird, wodurch wieder neue Daten in das Message Object geschrieben werden können.

Die Nachbearbeitungs-Schritte, die auszuführen sind, nachdem ein Message Object mit über den CAN-Bus übertragenen Daten beschrieben wurde, umfassen zumindest, daß die im Message Object gespeicherten Daten aus dem Message Object ausgelesen und ausgewertet oder weiterverarbeitet werden, und daß das betreffende Message Object zur erneuten Benutzung freigegeben wird, wodurch wieder neue Daten in das Message Object geschrieben werden können.

Die Veranlassung der genannten oder anderer Nachbearbeitungs-Schritte erfolgt durch ein von der Steuereinrichtung CTRL erzeugtes und ausgegebenes Interrupt-Request-Signal.

Da die auszuführenden Nachbearbeitungs-Schritte unter anderem davon abhängen, ob das auslösende Ereignis für die Nachbearbeitung die Ausgabe von Daten auf den CAN-Bus oder die Übernahme von über den CAN-Bus übertragenen Daten in eines der Message Objects ist, und auf welche Art und Weise und/oder durch welche Mikrocontroller-Komponente die empfangenen Daten ausgewertet oder weiterverarbeitet werden, muß die Steuereinrichtung CTRL verschiedene Interrupt-Request-Signale erzeugen und ausgeben können, wobei es von den auszuführenden Nachbearbeitungs-Schritten abhängt, welches Interrupt-Request-Signal durch die Steuereinrichtung CTRL jeweils erzeugt und ausgegeben wird. Im betrachteten Beispiel kann die Steuereinrichtung CTRL 8 verschiedene Interrupt-Request-Signale erzeugen und ausgeben.

Im wesentlichen gleichzeitig mit der Erzeugung und Ausgabe des Interrupt-Request-Signals wird in den Message-Pending-Speicher MPS eine Information über das den Interrupt Request auslösende Ereignis geschrieben. Genauer gesagt trägt die Steuereinrichtung CTRL in den Message-Pending-Speicher MPS eine Information ein, aus welcher sich später das Message Object ermitteln läßt, dessen Beschreiben oder Auslesen der Anlaß für die Erzeugung und Ausgabe des Interrupt-Request-Signals war. Ein Eintrag in das erste Message Pending Register MPR1 erfolgt, wenn das auslösende Ereignis für den Interrupt Request die Ausgabe von Daten auf den CAN-Bus ist; ein Eintrag in das zweite Message Pending Register MPR2 erfolgt, wenn das auslösende Ereignis die Übernahme von über den CAN-Bus übertragenen Daten in eines der Message Objects ist.

Die Anzahl der Bits, die jedes der Message Pending Register MPR1 und MPR2 umfaßt, entspricht der Anzahl der vorhandenen Message Objects, beträgt im betrachteten Beispiel also jeweils 32. Es existiert eine feste Zuordnung zwischen den Bits der Message Pending Register und den Message Objects. Beispielsweise ist - für n gleich 1 bis 32 - das n-te Bit der Message Pending Register jeweils dem n-ten Message Object zugeordnet.

Wenn das auslösende Ereignis für einen Interrupt Request das Auslesen der in einem i-ten Message Object gespeicherten Daten und die Ausgabe derselben auf den CAN-Bus ist, setzt die Steuereinrichtung das i-te Bit des ersten Message Pending Registers MPR1; wenn das auslösende Ereignis für einen Interrupt Request die Übernahme von über den CAN-Bus übertragenen Daten in das j-te Message Object ist, setzt die Steuereinrichtung das j-te Bit des zweiten Message Pending Registers MPR2.

Wenn die Steuereinrichtung CTRL ein Interrupt-Request-Signal erzeugt und ausgibt, wird hierdurch die Ausführung einer dem Interrupt-Request-Signal zugeordnete Interrupt Service Routine durch die CPU veranlaßt. Diese Interrupt Service Routine weiß aber zunächst noch nicht, für welches Message Object die von ihr durchzuführenden Nachbearbeitungs-Schritte durchzuführen sind. Dies kann sie aber anhand der gesetzten Bits in den Message Pending Registern MPR1 und MPR2 ermitteln. Nachdem sie dies getan hat, führt sie die von ihr durchzuführenden Operationen aus und setzt die Bits der Message Pending Register, die dem Message Object zugeordnet sind, für welches die betreffenden Operationen ausgeführt wurden, wieder zurück.

In der Praxis kommt es häufig vor, daß die den Interrupt Requests zugeordneten Interrupt Service Routinen nicht schritthaltend ausgeführt werden können, so daß in den Message Pending Registern MPR1 und MPR2 mehr als nur ein Bit gesetzt sein kann.

Dadurch wird die Ermittlung des Message Objects, für welche eine gerade ausgeführte Interrupt Service Routine die von ihr auszuführenden Operationen durchzuführen hat, aufwendiger. Dies hat zwei Gründe, nämlich
1) daß die Bits, die in den Message Pending Registern gesetzt sind, teilweise Message Objects zugeordnet sind, für welche andere Nachbearbeitungs-Schritte durchzuführen sind als die Nachbearbeitungs-Schritte, die von der gerade ausgeführten Interrupt Service Routine ausgeführt werden, und
2) daß sich unter den Message Objects, die den gesetzten Bits der Message Pending Register zugeordnet sind, mehrere Message Objects befinden, für welche die Nachbearbeitungs-Schritte durchzuführen sind, die von der gerade ausgeführten Interrupt Service Routine ausgeführt werden.

Problem 1) wird dadurch gelöst, daß jede Interrupt Service Routine bei der Auswahl des zu bearbeitenden Message Objects nur diejenigen Bits der Message Pending Register berücksichtigt, die Message Objects zugeordnet sind, für welche die von der betreffenden Interrupt Service Routine durchgeführten Nachbearbeitungs-Schritte durchzuführen wären, wenn das zugeordnete Bit in den Message Pending Registern gesetzt wäre. Welche Nachbearbeitungs-Schritte für die Message Objects auszuführen wären, wenn das ihnen zugeordnete Bit gesetzt ist, ist bekannt, weil jedes Message Object entweder für die Zwischenspeicherung von auf den CAN-Bus auszugebenden Daten oder für die Zwischenspeicherung von vom CAN-Bus übernommenen Daten reserviert ist, und weil es von der durch die Daten repräsentierten Information abhängt, in welches Message Object die jeweiligen Daten geschrieben werden. Die Nichtberücksichtigung der nicht zu berücksichtigenden Bits erfolgt durch Masken, die den jeweiligen Interrupt Service Routinen zugeordnet sind, und unter Verwendung welcher die jeweils nicht zu berücksichtigenden Bits der Message Pending Register MPR1 und MPR2 ausgeblendet werden können.

Problem 2) wird dadurch gelöst, daß die Interrupt Service Routine die von ihr auszuführenden Nachbearbeitungs-Schritte jeweils für das Message Object ausführt, welchem unter den Message Objects, für die diese Nachbearbeitungs-Schritte auszuführen sind, die höchste Priorität zugeordnet ist. Im betrachteten Beispiel ist dies jeweils dasjenige Message Object, dem von den bei der Auswahl zu berücksichtigenden Message Objects das Message-Pending-Register-Bit zugeordnet ist, das innerhalb der Message Pending Register am weitesten vorne steht.

Die vorstehend genannten Maßnahmen zur Auswahl des Message Objects, für welches eine jeweilige Interrupt Service Routine auszuführen ist, ist mit einem vertretbaren Aufwand durchführbar, wenn nur relativ wenige Message Objects vorhanden sind, und damit auch nur relativ wenige Bits umfassende Message Pending Register vorzusehen sind. CAN-Knoten von komplexeren CANs müssen jedoch sehr viele, beispielsweise 128 Message Objects aufweisen. Dies macht die Auswahl des Message Objects, für welches die durch eine Interrupt Service Routine ausgeführten Nachbearbeitungs-Schritte auszuführen sind, sehr viel aufwendiger.

Es existieren zahlreiche Veröffentlichungen über den Aufbau und/oder die Funktion von CAN-Knoten. Ein Beispiel hierfür ist die EP-A-1 085 722. In dieser Druckschrift ist ein CAN-Knoten gemäß dem Oberbegriff des Patentanspruchs 1 beschrieben. Dieser Druckschrift sind jedoch keine Anregungen zur Lösung der vorstehend beschriebenen Probleme entnehmbar. Es existieren ferner zahlreiche Veröffentlichungen über die Abarbeitung von Interrupt Requests. Ein Beispiel hierfür ist die US-A-4 734 882. Auch dieser Druckschrift sind jedoch keine Anregungen zur Lösung der vorstehend beschriebenen Probleme entnehmbar.

Der vorliegenden Erfindung liegt daher die Aufgabe zugrunde, den CAN-Knoten gemäß dem Oberbegriff des Patentanspruchs 1 derart weiterzubilden, daß die Nachbearbeitungs-Schritte, die auszuführen sind, nachdem die in einem Message Object gespeicherten Daten aus dem Message Object ausgelesen und auf den CAN-Bus ausgegeben wurden, oder nachdem ein Message Object mit über den CAN-Bus übertragenen Daten beschrieben wurde, mit geringerem Aufwand durchführbar sind als es bisher der Fall ist.

Diese Aufgabe wird erfindungsgemäß durch den in Patentanspruch 1 beanspruchten CAN-Knoten gelöst.

Der erfindungsgemäße CAN-Knoten zeichnet sich unter anderem dadurch aus, daß einstellbar ist, an welche Stelle innerhalb der Speichereinrichtung die in die Speichereinrichtung einzuschreibende Information geschrieben wird.

Durch die beanspruchte Einstellung der Zuordnung zwischen den Message Objects und den Stellen innerhalb der Speichereinrichtung (innerhalb des Message Pending Speichers), die jeweils zu beschreiben sind, nachdem in einem Message Object gespeicherte Daten auf den CAN-Bus ausgegeben wurden oder nachdem über den CAN-Bus übertragene Daten in einem Message Object gespeichert wurden, läßt sich bei der Ausführung der Nachbearbeitungs-Schritte, genauer gesagt bei der Ausführung der die Nachbearbeitungsschritte durchführenden Interrupt Service Routine, schneller und einfacher ermitteln, für welches Message Object die Nachbearbeitungsschritte auszuführen sind.

Vorteilhafte Weiterbildungen der Erfindung sind den Unteransprüchen, der folgenden Beschreibung, und den Figuren entnehmbar.

Die Erfindung wird nachfolgend anhand von Ausführungsbeispielen unter Bezugnahme auf die Figuren näher erläutert. Es zeigen
- Figur 1: den Aufbau des CAN-Controllers des im folgenden beschriebenen CAN-Knotens,
- Figur 2: den Aufbau eines Steuerdatenbereiches der Message Objects des CAN-Controllers gemäß Figur 1,
- Figur 3: eine Anordnung zur Ermittlung der Stelle innerhalb eines Message-Pending-Speichers, an welche die in den Message-Pending-Speicher einzuschreibende Information zu schreiben ist,
- Figur 4: den Aufbau eines CAN,
- Figur 5: den Aufbau eines durch einen Mikrocontroller realisierten CAN-Knotens, und
- Figur 6: den Aufbau eines herkömmlichen CAN-Controllers.

Der im folgenden beschriebene CAN-Knoten ist Bestandteil eines CAN, welches beispielsweise den in der Figur 4 gezeigten Aufbau aufweist. Der prinzipielle Aufbau und die Arbeitsweise eines den im folgenden beschriebenen CAN-Knoten enthaltenden CAN unterscheidet sich nicht von einem ausschließlich herkömmliche CAN-Knoten enthaltenden CAN. Unterschiedlich sind "nur" der Aufbau und die Arbeitsweise des hier vorgestellten CAN-Knotens, wobei sich dieser CAN-Knoten jedoch nach außen hin wie ein herkömmlicher CAN-Knoten verhält und folglich der im folgenden beschriebene CAN-Knoten und herkömmliche CAN-Knoten ohne Probleme kooperieren können.

Der im folgenden beschriebene CAN-Knoten wird durch einen 32-Bit-Mikrocontroller gebildet. Es kann jedoch auch ein anderer Mikrocontroller, beispielsweise ein 16-Bit-Mikrocontroller, oder eine andere programmgesteuerte Einheit wie beispielsweise ein Mikroprozessor oder ein Signalprozessor verwendet werden.

Der prinzipielle Aufbau des im folgenden beschriebenen CAN-Knotens entspricht dem Aufbau des in der Figur 5 gezeigten CAN-Knotens. Unterschiedlich sind jedoch der Aufbau und die Arbeitsweise des CAN-Controllers, sowie die Operationen, die auszuführen sind, nachdem die in einem Message Object gespeicherten Daten aus dem Message Object ausgelesen und auf den CAN-Bus ausgegeben wurden, oder nachdem ein Message Object mit über den CAN-Bus übertragenen Daten beschrieben wurde.

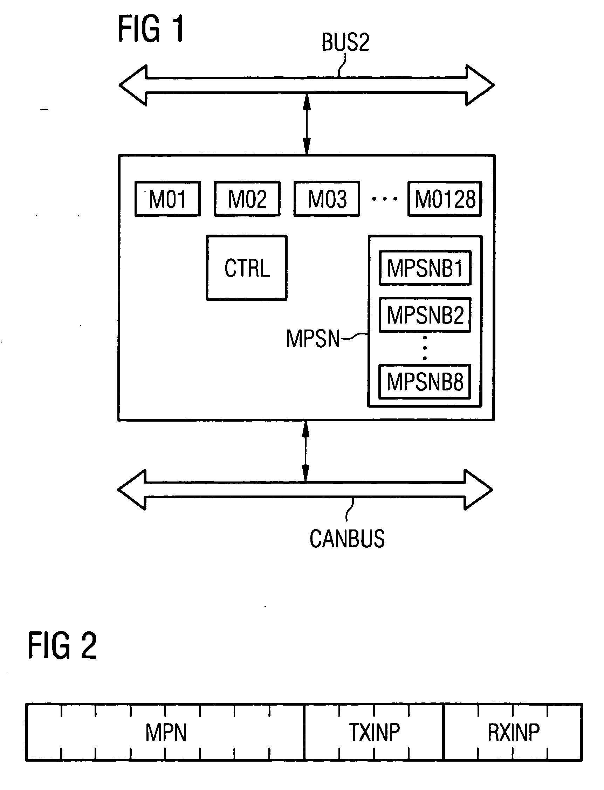

Der Aufbau des CAN-Controllers des hier vorgestellten CAN-Knotens ist in Figur 1 gezeigt.

Der in der Figur 1 gezeigte CAN-Controller entspricht teilweise dem in Figur 6 gezeigten herkömmlichen CAN-Controller.

Mit den gleichen Bezugszeichen bezeichnete Komponenten sind gleiche oder einander entsprechende Komponenten.

Der in der Figur 1 gezeigte CAN-Controller enthält eine Steuereinrichtung CTRL, 128 Message Objects MO1 bis MO128, und einen Message-Pending-Speicher MPSN, wobei der Message-Pending-Speicher MPSN im betrachteten Beispiel in 8 Message-Pending-Speicherbereiche MPSNB1 bis MPSNB8 unterteilt ist, von welchen jeder 32 Bits umfaßt.

Die Message Objects MO1 bis MO128 sind wie die Message Objects MO1 bis MO32 des herkömmlichen CAN-Controllers gemäß Figur 6 beispielsweise durch Teile eines RAM gebildete Speicherbereiche, in welchen die auf den CAN-Bus auszugebenden Daten sowie die über den CAN-Bus empfangenen und in den CAN-Knoten übernommenen Daten zwischengespeichert werden.

Wenn der Mikrocontroller, genauer gesagt eine der Komponenten des Mikrocontrollers über den CAN-Bus Daten an einen der anderen Knoten des CAN übertragen möchte, schreibt die betreffende Mikrocontroller-Komponente diese Daten in eines der Message Objects. Welches Message Object hierfür verwendet wird, hängt insbesondere von der Information ab, die durch die betreffenden Daten repräsentiert wird, und/oder von der Priorität, mit welcher die Daten auf den CAN-Bus auszugeben sind. Die Steuereinrichtung CTRL durchsucht fortlaufend oder in gewissen (regelmäßigen oder unregelmäßigen) zeitlichen Abständen die Message Objects, um zu ermitteln, ob und gegebenenfalls in welchen Message Objects sich Daten befinden, die auf den CAN-Bus auszugeben sind. Wenn in mehreren Message Objects auf den CAN-Bus auszugebende Daten gespeichert sind, ermittelt die Steuereinrichtung CTRL zusätzlich, in welchem Message Object die Daten gespeichert sind, die als erste auszugeben sind. Anschließend liest die Steuereinrichtung CTRL diese Daten aus dem betreffenden Message Object aus, setzt diese Daten zusammen mit weiteren Daten zu einer Message zusammen, und gibt diese Message auf den CAN-Bus aus.

Die Steuereinrichtung CTRL überprüft ferner, ob in den über den CAN-Bus übertragenen Messages Daten enthalten sind, die von dem die Steuereinrichtung enthaltenden Knoten benötigt werden oder für diesen Knoten bestimmt sind. Falls dies der Fall ist, werden die in der Message enthaltenen Daten in eines der Message Objects geschrieben. In welches Message Object die Daten geschrieben werden, hängt von der durch die Daten repräsentierten Information, genauer gesagt dem Identifier-Feld der Message ab.

Jedes Mal, wenn die in einem Message Object gespeicherten Daten aus dem Message Object ausgelesen und auf den CAN-Bus ausgegeben wurden, und jedes Mal, wenn ein Message Object mit über den CAN-Bus übertragenen Daten beschrieben wurde, veranlaßt die Steuereinrichtung CTRL, daß bestimmte, im folgenden als Nachbearbeitungs-Schritte bezeichnete Operationen ausgeführt werden.

Die Nachbearbeitungs-Schritte, die auszuführen sind, nachdem die in einem Message Object gespeicherten Daten aus dem Message Object ausgelesen und auf den CAN-Bus ausgegeben wurden, umfassen zumindest, daß das betreffende Message Object zur erneuten Benutzung freigegeben wird, wodurch wieder neue Daten in das Message Object geschrieben werden können.

Die Nachbearbeitungs-Schritte, die auszuführen sind, nachdem ein Message Object mit über den CAN-Bus übertragenen Daten beschrieben wurde, umfassen zumindest, daß die im Message Object gespeicherten Daten aus dem Message Object ausgelesen und ausgewertet oder weiterverarbeitet werden, und daß das betreffende Message Object zur erneuten Benutzung freigegeben wird, wodurch wieder neue Daten in das Message Object geschrieben werden können.

Die Veranlassung der genannten oder anderer Nachbearbeitungs-Schritte erfolgt durch ein von der Steuereinrichtung CTRL erzeugtes und ausgegebenes Interrupt-Request-Signal.

Da die auszuführenden Nachbearbeitungs-Schritte unter anderem davon abhängen, ob das auslösende Ereignis für die Nachbearbeitung die Ausgabe von Daten auf den CAN-Bus oder die Übernahme von über den CAN-Bus übertragenen Daten in eines der Message Objects ist, und auf welche Art und Weise und/oder durch welche Mikrocontroller-Komponente die empfangene Daten auszuwerten oder weiterzuverarbeiten sind, muß die Steuereinrichtung CTRL verschiedene Interrupt-Request-Signale erzeugen und ausgeben können, wobei es von den auszuführenden Nachbearbeitungs-Schritten abhängt, welches Interrupt-Request-Signal durch die Steuereinrichtung CTRL erzeugt und ausgegeben wird. Im betrachteten Beispiel kann die Steuereinrichtung CTRL 16 verschiedene Interrupt-Request-Signale erzeugen und ausgeben. Der Vollständigkeit halber sei darauf hingewiesen, daß auf die Zahl 16 keine Einschränkung besteht; es kann auch mit mehr oder weniger als 16 verschiedenen Interrupt-Request-Signalen gearbeitet werden.

Im wesentlichen gleichzeitig mit der Erzeugung und Ausgabe des Interrupt-Request-Signals wird in den Message-Pending-Speicher MPSN eine Information über das den Interrupt Request auslösende Ereignis geschrieben. Genauer gesagt trägt die Steuereinrichtung CTRL in den Message-Pending-Speicher MPSN eine Information ein, aus welcher sich später das Message Object ermitteln läßt, dessen Beschreiben oder Auslesen der Anlaß für die Erzeugung und Ausgabe des Interrupt-Request-Signals war.

Der Message-Pending-Speicher MPSN hat demzufolge die selbe Funktion wie der Message-Pending-Speicher MPS des in der Figur 6 gezeigten herkömmlichen CAN-Controllers.

Der Aufbau und die Verwendung des Message-Pending-Speichers MPSN unterscheiden sich jedoch vom Aufbau und der Verwendung des im herkömmlichen CAN-Controller gemäß Figur 6 verwendeten Message-Pending-Speichers MPS.

Ein erster Unterschied besteht darin, daß der Message-Pending-Speicher MPSN im Gegensatz zu dem im herkömmlichen CAN-Controller gemäß Figur 6 verwendeten Message-Pending-Speicher MPS nicht durch Register, also nicht durch Flip-Flops oder dergleichen realisiert ist, sondern durch ein RAM oder einen Teil eines RAM gebildet wird. Dies ermöglicht einen kleineren und einfacheren Aufbau des CAN-Controllers. Prinzipiell könnte der Message-Pending-Speicher MPSN aber auch durch Register oder Flip-Flops realisiert sein.

Ein weiterer Unterschied besteht darin, daß es nicht fest vorgegeben, sondern einstellbar ist, an welche Stelle die in den Message-Pending-Speicher MPSN einzuschreibende Information innerhalb des Message-Pending-Speichers gespeichert wird.

Im betrachteten Beispiel ist es so, daß die Stelle, an welche die in den Message-Pending-Speicher MPSN einzuschreibende Information innerhalb des Message-Pending-Speichers gespeichert wird, unter Verwendung von im CAN-Controller gespeicherten Steuerdaten bestimmt wird, wobei diese Steuerdaten vorzugsweise in einem flüchtigen oder umprogrammierbaren nichtflüchtigen Speicher gespeichert sind und jederzeit verändert werden können.

Zumindest ein Teil dieser Steuerdaten sind den Message Objects zugeordnete Steuerdaten und sind im betrachteten Beispiel in einem Steuerdatenbereich der Message Objects gespeichert; jedes Message Object enthält einen Steuerdatenbereich, in welchem die dem jeweiligen Message Object zugeordneten Steuerdaten gespeichert sind. Die Steuerdatenbereiche der Message Objects werden im betrachteten Beispiel durch den Core C des den CAN-Knoten bildenden Mikrocontrollers oder durch die Steuereinrichtung CTRL des CAN-Controllers desselben beschrieben. Das Beschreiben des Steuerdatenbereiches mit Steuerdaten erfolgt unmittelbar nach der Inbetriebnahme des CAN-Knotens. Es erweist sich jedoch als vorteilhaft, wenn die dabei in den Steuerdatenbereich geschriebenen Steuerdaten zu einem späteren Zeitpunkt durch modifizierte Steuerdaten überschrieben werden können. Der Steuerdatenbereich wird jedoch nicht durch die in den Message Objects zwischenzuspeichernden Daten, d.h. nicht durch auf den CAN-Bus auszugebende Daten oder durch über den CAN-Bus erhaltene Daten beschrieben; das Beschreiben des Steuerdatenbereiches erfordert eine gesonderte Schreiboperation.

Die in den Message Objects gespeicherten Steuerdaten umfassen im betrachteten Beispiel
- eine 8 Bits umfassende Message Pending Number,
- einem 4 Bits umfassenden Receive Interrupt Node Pointer, und
- einem 4 Bits umfassenden Transmit Interrupt Node Pointer.

Der diese Steuerdaten speichernde Steuerdatenbereich ist in Figur 2 veranschaulicht. Dabei sind die Message Pending Number mit dem Bezugszeichen MPN bezeichnet, der Receive Interrupt Node Pointer mit dem Bezugszeichen RXINP, und der Transmit Interrupt Node Pointer mit dem Bezugszeichen TXINP.

Im betrachteten Beispiel existieren mehrere Möglichkeiten zur Festlegung der Stelle, an welche die in den Message-Pending-Speicher MPSN einzuschreibende Information innerhalb des Message-Pending-Speichers gespeichert wird.

Die erste Möglichkeit besteht darin, daß diese Stelle unter alleiniger Berücksichtigung des Inhalts der Message Pending Number MPN festgelegt wird. Hierbei können beispielsweise die drei höchstwertigen Bits der Message Pending Number MPN, d.h. die Bits 5 bis 7 der Message Pending Number MPN zur Auswahl des zu beschreibenden Message-Pending-Speicherbereiches MPSNBx verwendet werden, und die fünf niederwertigen Bits der Message Pending Number MPN, d.h., die Bits 0 bis 4 der Message Pending Number MPN zur Auswahl des zu beschreibenden Bits innerhalb des ausgewählten Message-Pending-Speicherbereiches MPSNBx. Der Vollständigkeit halber sei bereits an dieser Stelle darauf hingewiesen, daß auf die genannte Zuordnung keine Einschränkung besteht; prinzipiell können beliebige drei Bits der Message Pending Number MPN zur Auswahl des zu beschreibenden Message-Pending-Speicherbereiches MPSNBx verwendet werden, und beliebige fünf Bits zur Auswahl des zu beschreibenden Bits innerhalb des ausgewählten Message-Pending-Speicherbereiches MPSNBx.

Eine zweite Möglichkeit zur Festlegung der Stelle, an welche die in den Message-Pending-Speicher MPSN einzuschreibende Information innerhalb des Message-Pending-Speichers gespeichert wird, besteht darin, daß diese Stelle zum Teil durch den Inhalt der Message Pending Number MPN, und zum Teil durch die Interrupt Node Pointer TXINP und RXINP festgelegt wird. Dies kann beispielsweise dadurch erfolgen, daß aus der Message Pending Number MPN und den Interrupt Node Pointern TXINP und RXINP ein 8 Bits umfassender Auswahlwert SEL gebildet wird,
- dessen Bits 0 bis 3 durch die Bits 0 bis 3 der Message Pending Number MPN gebildet werden,
- dessen Bit 4 wahlweise durch das Bit 4 der Message Pending Number MPN, oder durch das Bit 0 des Receive Interrupt Node Pointer RXINP, oder durch das Bit 0 des Transmit Interrupt Node Pointer TXINP gebildet wird,
- dessen Bit 5 wahlweise durch das Bit 5 der Message Pending Number MPN, oder durch das Bit 1 des Receive Interrupt Node Pointer RXINP, oder durch das Bit 1 des Transmit Interrupt Node Pointer TXINP gebildet wird,
- dessen Bit 6 wahlweise durch das Bit 6 der Message Pending Number MPN, oder durch das Bit 2 des Receive Interrupt Node Pointer RXINP, oder durch das Bit 2 des Transmit Interrupt Node Pointer TXINP gebildet wird, und
- dessen Bit 7 wahlweise durch das Bit 7 der Message Pending Number MPN, oder durch das Bit 3 des Receive Interrupt Node Pointer RXINP, oder durch das Bit 3 des Transmit Interrupt Node Pointer TXINP gebildet wird, und
- dessen drei höchstwertige Bits, d.h. die Bits 5 bis 7 zur Auswahl des zu beschreibenden Message-Pending-Speicherbereiches MPSNBx verwendet werden, und
- dessen fünf niederwertige Bits d.h. die Bits 0 bis 4 der zur Auswahl des zu beschreibenden Bits innerhalb des ausgewählten Message-Pending-Speicherbereiches MPSNBx verwendet werden.

Es dürfte einleuchten und bedarf keiner näheren Erläuterung, daß auch in diesem Fall auf die genannte Zuordnung keine Einschränkung besteht; prinzipiell können
- beliebige Bits des Auswahlwertes SEL durch beliebige Bits der Message Pending Number MPN oder der Interrupt Node Pointer RXINP und TXINP gebildet werden, und
- beliebige drei Bits des Auswahlwertes SEL zur Auswahl des zu beschreibenden Message-Pending-Speicherbereiches MPSNBx verwendet werden, und beliebige fünf Bits des Auswahlwertes SEL zur Auswahl des zu beschreibenden Bits innerhalb des ausgewählten Message-Pending-Speicherbereiches MPSNBx verwendet werden.

Im betrachteten Beispiel ist es so, daß wahlweise von der ersten Möglichkeit oder von der zweiten Möglichkeit zur Festlegung der Stelle, an welche die in den Message-Pending-Speicher MPSN einzuschreibende Information innerhalb des Message-Pending-Speichers gespeichert wird, Gebrauch gemacht werden kann.

Von welcher Möglichkeit Gebrauch gemacht wird, wird durch im CAN-Controller gespeicherte weitere Steuerdaten bestimmt. Diese Steuerdaten werden im folgenden als MPSEL bezeichnet und umfassen im betrachteten Beispiel 4 Bits und, wobei
- durch das Bit 0 der Steuerdaten MPSEL der Inhalt des Bit 4 des Auswahlwertes SEL bestimmt wird,
- durch das Bit 1 der weiteren Steuerdaten MPSEL der Inhalt des Bit 5 des Auswahlwertes SEL bestimmt wird,
- durch das Bit 2 der weiteren Steuerdaten MPSEL der Inhalt des Bit 6 des Auswahlwertes SEL bestimmt wird, und
- durch das Bit 3 der weiteren Steuerdaten MPSEL der Inhalt des Bit 7 des Auswahlwertes SEL bestimmt wird.

Die weiteren Steuerdaten MPSEL sind im betrachteten Beispiel nicht einem bestimmten Message Object zugeordnete Steuerdaten, sondern globale Steuerdaten, die nur ein einziges Mal im CAN-Controller gespeichert sind und für alle Message Objects verwendet werden. Prinzipiell wäre es jedoch auch möglich, daß jedem Message Object eigene Steuerdaten MPSEL zugeordnet sind und/oder die Steuerdaten MPSEL wie die Steuerdaten MPN, TXINP und RXINP in den Steuerdatenbereichen der Message Objects gespeichert sind.

Die Steuerdaten MPSEL sind vorzugsweise veränderbare Daten und werden im betrachteten Beispiel durch den Core C des den CAN-Knoten bildenden Mikrocontrollers oder durch die Steuereinrichtung CTRL des CAN-Controllers desselben in den CAN-Controller geschrieben. Das Einschreiben des Steuerdaten MPSEL in den CAN-Controller erfolgt unmittelbar nach der Inbetriebnahme des CAN-Knotens. Es erweist sich jedoch als vorteilhaft, wenn diese Daten zu einem späteren Zeitpunkt durch modifizierte Steuerdaten überschrieben werden können.

Eine mögliche Anordnung zur Bildung des Auswahlwertes SEL ist in Figur 3 veranschaulicht. Die Figur 3 zeigt die Message Pending Number MPN, die Interrupt Node Pointer TXINP/RXINP, die Steuerdaten MPSEL, Multiplexer MUX0 bis MUX3, und den Auswahlwert SEL.

Wie aus der Figur 3 ersichtlich ist,
- werden die Bits 0 bis 3 des Auswahlwertes SEL durch die Bits 0 bis 3 der Message Pending Number MPN gebildet,
- wird das Bit 4 des Auswahlwertes SEL durch das Ausgangssignal des Multiplexers MUX0 bestimmt, wobei dieser Multiplexer als Eingangssignale das Bit 4 der Message Pending Number MPN und das Bit 0 des Transmit Interrupt Node Pointers TXINP oder des Receive Interrupt Node Pointers RXINP zugeführt bekommt und durch das Bit 0 der Steuerdaten MPSEL gesteuert wird,
- wird das Bit 5 des Auswahlwertes SEL durch das Ausgangssignal des Multiplexers MUX1 bestimmt, wobei dieser Multiplexer als Eingangssignale das Bit 5 der Message Pending Number MPN und das Bit 1 des Transmit Interrupt Node Pointers TXINP oder des Receive Interrupt Node Pointers RXINP zugeführt bekommt und durch das Bit 1 der Steuerdaten MPSEL gesteuert wird,
- wird das Bit 6 des Auswahlwertes SEL durch das Ausgangssignal des Multiplexers MUX2 bestimmt, wobei dieser Multiplexer als Eingangssignale das Bit 6 der Message Pending Number MPN und das Bit 2 des Transmit Interrupt Node Pointers TXINP oder des Receive Interrupt Node Pointers RXINP zugeführt bekommt und durch das Bit 2 der Steuerdaten MPSEL gesteuert wird, und
- wird das Bit 7 des Auswahlwertes SEL durch das Ausgangssignal des Multiplexers MUX3 bestimmt, wobei dieser Multiplexer als Eingangssignale das Bit 7 der Message Pending Number MPN und das Bit 3 des Transmit Interrupt Node Pointers TXINP oder des Receive Interrupt Node Pointers RXINP zugeführt bekommt und durch das Bit 0 der Steuerdaten MPSEL gesteuert wird.

Ob der Transmit Interrupt Node Pointer TXINP oder der Receive Interrupt Node Pointer RXINP verwendet wird, hängt davon ab, ob das auslösende Ereignis für das Beschreiben des Message-Pending-Speichers MPSN das Ausgeben von in einem Message Object gespeicherten Daten auf den CAN-Bus ist (in diesem Fall wird der Transmit Interrupt Node Pointer TXINP verwendet), oder das Beschreiben eines Message Objects durch über den CAN-Bus übertragenen Daten ist (in diesem Fall wird der Receive Interrupt Node Pointer RXINP verwendet).

Der Transmit Interrupt Node Pointer TXINP und der Receive Interrupt Node Pointer RXINP werden darüber hinaus auch zur Festlegung des Interrupt Request verwendet, der ausgegeben wird, nachdem in einem Message Object gespeicherte Daten auf den CAN-Bus ausgegeben wurden bzw. nachdem über den CAN-Bus übertragene Daten in ein Message Object geschrieben wurden.

Nachdem im einem Message Object gespeicherte Daten auf den CAN-Bus ausgegeben wurden,
- liest der CAN-Controller aus dem betreffenden Message Object den Transmit Interrupt Node Pointer TXINP aus, und gibt einen durch den Inhalt des Transmit Interrupt Node Pointers TXINP spezifizierten Interrupt Request aus, und
- setzt der CAN-Controller im Message-Pending-Speicher MPSN ein dem betreffenden Message Object zugeordnetes Bit, wobei das zugeordnete Bit aus der im betreffenden Message Object gespeicherten Message Pending Number MPN, oder aus der Message Pending Number MPN und dem ebenfalls im betreffenden Message Object gespeicherten Transmit Interrupt Node Pointer TXINP ermittelt wird.

Nachdem über den CAN-Bus übertragene Daten in ein Message Object geschrieben wurden,
- liest der CAN-Controller aus dem betreffenden Message Object den Receive Interrupt Node Pointer RXINP aus, und gibt einen durch den Inhalt des Receive Interrupt Node Pointers RXINP spezifizierten Interrupt Request aus, und
- setzt der CAN-Controller im Message-Pending-Speicher MPSN ein dem betreffenden Message Object zugeordnetes Bit, wobei das zugeordnete Bit aus der im betreffenden Message Object gespeicherten Message Pending Number MPN, oder aus der Message Pending Number MPN und dem ebenfalls im betreffenden Message Object gespeicherten Receive Interrupt Node Pointer RXINP ermittelt wird.

Auf die vorstehend beschriebene Art und Weise kann einem jedem Message Object für die Information, die nach dem Beschreiben oder Auslesen des betreffenden Message Objects in den Message-Pending-Speicher MPSN zu schreiben ist, eine beliebige Stelle innerhalb des Message-Pending-Speichers zugeordnet werden. Dadurch ist es möglich, daß den Message Objects, deren Beschreiben oder Auslesen die selben Nachbearbeitungs-Schritte erfordern, nebeneinander oder nahe beieinanderliegende Stellen innerhalb des Message-Pending-Speichers MPSN zugeordnet werden. Dies vereinfacht die Ermittlung, für welches Message Object bzw. für welche Message Objects die durch eine jeweilige Interrupt Service Routine auszuführenden Nachbearbeitungs-Schritte auszuführen sind.

Besonders einfach ist es, wenn allen Message Objects, deren Beschreiben oder Auslesen die selben Nachbearbeitungs-Schritte erfordern, innerhalb eines einzigen Message-Pending-Speicherbereiches MPSNBx liegende Stellen zugewiesen werden.

Noch einfacher ist die Ermittlung, wenn für jeden der verschiedenen Interrupt Requests, ein eigener Message-Pending-Speicherbereich MPSNBx vorgesehen ist, im betrachteten Beispiel also 16 Message-Pending-Speicherbereiche MPSNB0 bis MPSNB15 vorgesehen sind.

Es dürfte einleuchten und bedarf keiner näheren Erläuterung, daß der vorstehend beschriebene CAN-Controller mannigfaltig modifizierbar ist. Insbesondere kann die Anzahl der verschiedenen Interrupt Requests, die Anzahl der Message Objects, die Anzahl der Message-Pending-Speicherbereiche, die Größe der Message-Pending-Speicherbereiche, der Umfang und die Verwendung der Steuerdaten MPN, TXINP, RXINP und MPSEL beliebig verändert werden. Darüber hinaus kann vorgesehen werden, die Bestimmung der Stelle, an welche die in den Message-Pending-Speicher zu schreibenden Daten zu schreiben sind, unter Berücksichtigung zusätzlicher und/oder anderer Steuerdaten durchzuführen. Ferner besteht keine zwingende Notwendigkeit, die den jeweiligen Message Objects zugeordneten Steuerdaten in den Message Objects zu speichern.

Durch den vorstehend beschriebenen CAN-Controller ist es unabhängig von den Einzelheiten der praktischen Realisierung möglich, die nach dem Auslesen oder Beschreiben eine Message Objects durchzuführenden Nachbearbeitungsschritte schneller, einfacher, und mit geringerem Aufwand durchzuführen.

### Bezugszeichenliste

- BUSx: Bus
- C: Core
- CANBUS: CAN-Bus
- CTRL: Steuereinrichtung
- Kx: Knoten
- MOx: Message Object
- MPN: Message Pending Number
- MPRx: Message-Pending-Register
- MPS: Message-Pending-Speicher
- MPSEL: weitere Steuerdaten
- MPSN: Message-Pending-Speicher
- MPSNBx: Message-Pending-Speicherbereich
- MUXx: Multiplexer
- Px: Peripherieeinheit
- RXINP: Receive Interrupt Node Pointer
- Sx: Speichereinrichtung
- SEL: Auswahlwert
- TXINP: Transmit Interrupt Node Pointer

## Patentansprüche

1. CAN-Knoten mit einem mit einem CAN-Bus verbundenen CAN-Controller,
- wobei der CAN-Controller eine Vielzahl von Message Objects
- zum Zwischenspeichern von auf den CAN-Bus auszugebenden Daten, und/oder
- zum Zwischenspeichern von über den CAN-Bus übertragenen und vom CAN-Knoten benötigten Daten,
enthält, und
- wobei der CAN-Controller Interrupt-Request-Erzeugungs-Mittel enthält, durch welche nach der Ausgabe von in einem Message Object gespeicherten Daten auf den CAN-Bus und/oder nach dem Speichern von über den CAN-Bus empfangenen Daten in einem Message Object ein Interrupt Request erzeugt wird, und Informations-Hintragungs-Mittel enthält, durch welche in eine Speichereinrichtung eine Information eingetragen wird, aus welcher sich ermitteln läßt, für welches Message Object die durch den Interrupt Request gestartete Interrupt Service Routine auszuführen ist,
**dadurch gekennzeichnet,**
- **daß** über im CAN-Controller gespeicherte Steuerdaten einstellbar ist, an welche Stelle innerhalb der Speichereinrichtung die in die Speichereinrichtung einzuschreibende Information geschrieben wird,
- **daß** Bestimmungs-Mittel vorgesehen sind, durch welche unter Berücksichtigung der Steuerdaten die Stelle innerhalb der Speichereinrichtung bestimmt wird, an welche die in die Speichereinrichtung einzuschreibende Information geschrieben wird, und
- **daß** die Steuerdaten so beschaffen sind, daß die Bestimmungs-Mittel die Stellen innerhalb der Speichereinrichtung, an welche die in die Speichereinrichtung einzuschreibenden Information geschrieben werden, so festlegen, daß die Informations-Eintragungs-Mittel in die Speichereinrichtung einzutragenden Informationen, welche sich auf Message Objects beziehen, nach deren Beschreiben oder Auslesen die selbe Interrupt Request Routine auszuführen ist, an nebeneinander oder nahe beieinander liegende Stellen innerhalb der Speichereinrichtung in diese eintragen.

2. CAN-Knoten nach Anspruch 1,
**dadurch gekennzeichnet,**
**daß** die Steuerdaten in einem flüchtigen Speicher oder einem umprogrammierbaren nichtflüchtigen Speicher gespeichert sind und durch ein Überschreiben des Speichers jederzeit verändert werden können.

3. CAN-Knoten nach Anspruch 1,
**dadurch gekennzeichnet,**
**daß** zumindest ein Teil der Steuerdaten den Message Objects zugeordnete Steuerdaten sind.

4. CAN-Knoten nach Anspruch 3,
**dadurch gekennzeichnet,**
**daß** jedem Message Object Steuerdaten zugeordnet sind, und daß die Bestimmungs-Mittel dazu ausgelegt sind, die Bestimmung der Stelle innerhalb der Speichereinrichtung, an welche die in die Speichereinrichtung einzuschreibende Information geschrieben wird, unter Berücksichtigung der Steuerdaten durchzuführen, die dem Message Object zugeordnet sind, durch dessen Auslesen oder Beschreiben das Einschreiben der Information in die Speichereinrichtung veranlaßt wurde.

5. CAN-Knoten nach Anspruch 3,
**dadurch gekennzeichnet,**
**daß** die den Message Objects zugeordneten Steuerdaten in den Message Objects gespeichert sind, welchen sie zugeordnet sind.

6. CAN-Knoten nach Anspruch 5,
**dadurch gekennzeichnet,**
**daß** die in den Message Objects gespeicherten Steuerdaten in Bereichen der Message Objects gespeichert sind, die durch die in den Message Objects zwischenzuspeichernden Daten nicht überschrieben werden.

7. CAN-Knoten nach Anspruch 4,
**dadurch gekennzeichnet,**
**daß** die jedem Message Object zugeordneten Steuerdaten jeweils eine Message Pending Number (MPN) umfassen.

8. CAN-Knoten nach Anspruch 7,
**dadurch gekennzeichnet,**
**daß** die Bestimmungs-Mittel dazu ausgelegt sind, die Bestimmung der Stelle innerhalb der Speichereinrichtung, an welche die in die Speichereinrichtung einzuschreibende Information geschrieben wird, unter alleiniger Berücksichtigung der Message Pending Number (MPN) durchzuführen.

9. CAN-Knoten nach Anspruch 4,
**dadurch gekennzeichnet,**
**daß** die jedem Message Object zugeordneten Steuerdaten jeweils einen Receive Interrupt Node Pointer (RXINP) und/oder einen Transmit Interrupt Node Pointer (TXINP) umfassen, und daß die Bestimmungs-Mittel dazu ausgelegt sind, die Bestimmung der Stelle innerhalb der Speichereinrichtung, an welche die in die Speichereinrichtung einzuschreibende Information geschrieben wird, unter Berücksichtigung des Receive Interrupt Node Pointer (RXINP) oder des Transmit Interrupt Node Pointer (TXINP) durchzuführen.

10. CAN-Knoten nach Anspruch 9,
**dadurch gekennzeichnet,**
**daß** die Bestimmungs-Mittel dazu ausgelegt sind, die Bestimmung der Stelle innerhalb der Speichereinrichtung, an welche die in die Speichereinrichtung einzuschreibende Information geschrieben wird, unter Berücksichtigung von sowohl der Message Pending Number (MPN) als auch des Receive Interrupt Node Pointer (RXINP) oder des Transmit Interrupt Node Pointer (TXINP) durchzuführen.

11. CAN-Knoten nach Anspruch 9,
**dadurch gekennzeichnet,**
**daß** die Bestimmungs-Mittel dazu ausgelegt sind, die Bestimmung der Stelle innerhalb der Speichereinrichtung, an welche die in die Speichereinrichtung einzuschreibende Information geschrieben wird, unter Berücksichtigung des Receive Interrupt Node Pointers (RXINP) durchzuführen, wenn das auslösende Ereignis für das Einschreiben der Information in die Speichereinrichtung das Beschreiben des Message Objects mit über den CAN-Bus empfangenen Daten ist.

12. CAN-Knoten nach Anspruch 9,
**dadurch gekennzeichnet,**
**daß** die Bestimmungs-Mittel dazu ausgelegt sind, die Bestimmung der Stelle innerhalb der Speichereinrichtung, an welche die in die Speichereinrichtung einzuschreibende Information geschrieben wird, unter Berücksichtigung des Transmit Interrupt Node Pointers (TXINP) durchzuführen, wenn das auslösende Ereignis für das Einschreiben von Informationen in die Speichereinrichtung die Ausgabe von im Message Object gespeicherten Daten auf den CAN-Bus ist.

13. CAN-Knoten nach Anspruch 9,
**dadurch gekennzeichnet,**
**daß** die Interrupt-Request-Erzeugungs-Mittel dazu ausgelegt sind, den Interrupt Request, der erzeugt wird, nachdem in das Message Object, dem der Receive Interrupt Node Pointer (RXINP) zugeordnet ist, über den CAN-Bus übertragene Daten geschrieben wurden, unter Berücksichtigung des Receive Interrupt Node Pointer (RXINP) zu bestimmen.

14. CAN-Knoten nach Anspruch 9,
**dadurch gekennzeichnet,**
**daß** die Interrupt-Request-Erzeugungs-Mittel dazu ausgelegt sind, den Interrupt Request, der erzeugt wird, nachdem in dem Message Object, dem der Transmit Interrupt Node Pointer (TXINP) zugeordnet ist, gespeicherte Daten auf den CAN-Bus ausgegeben wurden, unter Berücksichtigung der Transmit Interrupt Node Pointer (RXINP) zu bestimmen.

15. CAN-Knoten nach Anspruch 8 und 10,
**dadurch gekennzeichnet,**
**daß** die Bestimmungs-Mittel dazu ausgelegt sind, die Bestimmung der Stelle innerhalb der Speichereinrichtung, an welche die in die Speichereinrichtung einzuschreibende Information geschrieben wird, wahlweise unter alleiniger Berücksichtigung der Message Pending Number (MPN), oder unter Berücksichtigung von sowohl der Message Pending Number (MPN) als auch des Receive Interrupt Node Pointer (RXINP) oder des Transmit Interrupt Node Pointer (TXINP) durchzuführen.

16. CAN-Knoten nach Anspruch 15,
**dadurch gekennzeichnet,**
**daß** die Bestimmungs-Mittel dazu ausgelegt sind, es vom Inhalt weiterer Steuerdaten (MPSEL) abhängig zu machen, ob die Bestimmung der Stelle innerhalb der Speichereinrichtung, an welche die in die Speichereinrichtung einzuschreibende Information geschrieben wird, unter alleiniger Berücksichtigung der Message Pending Number (MPN), oder unter Berücksichtigung von sowohl der Message Pending Number (MPN) als auch des Receive Interrupt Node Pointer (RXINP) oder des Transmit Interrupt Node Pointer (TXINP) erfolgt.

17. CAN-Knoten nach Anspruch 16,
**dadurch gekennzeichnet,**
**daß** die weiteren Steuerdaten (MPSEL) globale Steuerdaten sind, die nicht einem bestimmten Message Object zugeordnet sind, sondern für alle Message Objects gelten.

18. CAN-Knoten nach Anspruch 1,
**dadurch gekennzeichnet,**
**daß** die Bestimmungs-Mittel dazu ausgelegt sind, abhängig von den weiteren Steuerdaten (MPSEL) festzulegen, unter Berücksichtigung welcher Teile der Message Pending Number (MPN), und welcher Teile des Receive Interrupt Node Pointer (RXINP) oder des Transmit Interrupt Node Pointer (TXINP) die Stelle innerhalb der Speichereinrichtung bestimmt wird, an welche die in die Speichereinrichtung einzuschreibende Information geschrieben wird.

19. CAN-Knoten nach Anspruch 1,
**dadurch gekennzeichnet,**
**daß** die Speichereinrichtung in eine Vielzahl von Speicherbereichen aufgeteilt ist, und daß die Steuerdaten, unter Berücksichtigung welcher die Bestimmungs-Mittel die Stelle innerhalb der Speichereinrichtung bestimmen, an welche die in die Speichereinrichtung einzuschreibende Information geschrieben wird, so beschaffen sind, daß den Message Objects, deren Beschreiben oder Auslesen die Ausgabe des selben Interrupt Requests zur Folge hat, innerhalb des selben Speichereinrichtungs-Bereiches liegende Stellen zugewiesen werden.

20. CAN-Knoten nach Anspruch 1,
**dadurch gekennzeichnet,**
**daß** der CAN-Knoten eine programmgesteuerte Einheit enthält.

21. CAN-Knoten nach Anspruch 1,
**dadurch gekennzeichnet,**
**daß** der CAN-Knoten Bestandteil einer programmgesteuerten Einheit ist.

22. CAN-Knoten nach Anspruch 1,
**dadurch gekennzeichnet,**
**daß** die Steuerdaten, unter Berücksichtigung welcher die Bestitnmungs-Mittel die Stelle innerhalb der Speichereinrichtung bestimmen, an welche die in die Speichereinrichtung einzuschreibende Information geschrieben wird, durch die CPU der programmgesteuerten Einheit in den CAN-Controller geschrieben werden.

23. CAN-Knoten nach Anspruch 1,
**dadurch gekennzeichnet,**
**daß** die Speichereinrichtung durch ein RAM oder einen Teil eines im CAN-Controller vorgesehenen RAM gebildet wird.

## Claims

1. CAN node having a CAN controller which is connected to a CAN bus
- with the CAN controller containing a large number of message objects
- for buffer storage of data to be emitted to the CAN bus, and/or
- for buffer storage of data which is transmitted by the CAN bus and is required by the CAN node,
and
- with the CAN controller containing interrupt request production means by which, after data which has been stored in a message object is emitted to the CAN bus and/or after storage of data which has been received via the CAN bus, in a message object, an interrupt request is produced, and contains information entry means, by which information is entered in a memory device, from which it is possible to determine for which message object the interrupt service routine that has been started by the interrupt request must be carried out,
**characterized**
- **in that** it is possible to use control data stored in the CAN controller to select the point within the memory device to which the information to be written to the memory device is written,
- **in that** determination means are provided which, taking account of the control data, determine the point within the memory device to which the information to be written to the memory device is written, and
- **in that** the control data is configured such that the determination means define the locations within the memory device to which the information to be written to the memory device is written such that the information entry means enter information which is to be entered in the memory device and relates to message objects, after whose writing or reading the same interrupt request routine is to be carried out, in the memory device, at locations which are located alongside one another or close to one another within the memory device.

2. CAN node according to Claim 1,
**characterized in that**
the control data is stored in a volatile memory or a reprogrammable non-volatile memory, and can be amended at any time by overwriting the memory.

3. CAN node according to Claim 1,
**characterized in that**
at least some of the control data is control data associated with the message objects.

4. CAN node according to Claim 3,
**characterized in that**
each message object has associated control data, and **in that** the determination means are designed to determine the location within the memory device to which the information to be written to the memory device is written taking account of the control data which is associated with the message object, whose reading or writing would initiate the writing of the information to the memory device.

5. CAN node according to Claim 3,
**characterized in that**
the control data which is associated with the message objects is stored in the message objects with which it is associated.

6. CAN node according to Claim 5,
**characterized in that**
the control data which is stored in the message objects is stored in areas of the message objects which are not overwritten by the data to be buffer stored in the message objects.

7. CAN node according to Claim 4,
**characterized in that**
the control data which is associated with each message object in each case has a Message Pending Number (MPN).

8. CAN node according to Claim 7,
**characterized in that**
the determination means are designed to determine the location within the memory device to which the information to be written to the memory device is written taking account solely of the Message Pending Number (MPN).

9. CAN node according to Claim 4,
**characterized in that**
the control data which is associated with each message object in each case has a Receive Interrupt Node Pointer (RXINP) and/or a Transmit Interrupt Node Pointer (TXINP), and **in that** the determination means are designed to determine the location within the memory device to which the information to be written to the memory device is written taking account of the Receive Interrupt Node Pointer (RXINP) or of the Transmit Interrupt Node Pointer (TXINP).

10. CAN node according to Claim 9,
**characterized in that**
the determination means are designed to determine the location within the memory device to which the information to be written to the memory device is written taking account of both the Message Pending Number (MPN) and the Receive Interrupt Node Pointer (RXINP) or the Transmit Interrupt Node Pointer (TXINP).

11. CAN node according to Claim 9,
**characterized in that**
the determination means are designed to determine the location within the memory device to which the information to be written to the memory device is written taking account of the Receive Interrupt Node Pointers (RXINP) when the initiating event for the writing of the information to the memory device is the writing of data that has been received via the CAN bus to the message object.

12. CAN node according to Claim 9,
**characterized in that**
the determination means are designed to determine the location within the memory device to which the information to be written to the memory device is written taking account of the Transmit Interrupt Node Pointers (TXINP) when the initiating event for the writing of the information to the memory device is the emission of data that has been stored in the message object to the CAN bus.

13. CAN node according to Claim 9,
**characterized in that**
the interrupt request production means are designed to determine the interrupt request which is produced once data which has been transmitted via the CAN bus has been written to the message object with which the Receive Interrupt Node Pointer (RXINP) is associated, taking account of the Receive Interrupt Node Pointer (RXINP).

14. CAN node according to Claim 9,
**characterized in that**
the interrupt request production means are designed to determine the interrupt request which is produced once the data which has been stored in the message object with which the Transmit Interrupt Node Pointer (TXINP) is associated has been emitted to the CAN bus, taking account of the Transmit Interrupt Node Pointer (TXINP).

15. CAN node according to Claims 9 and 10,
**characterized in that**
the determination means are designed to determine the location within the memory device to which the information to be written to the memory device is written, selectively taking account solely of the Message Pending Number (MPN) or taking account of both the Message Pending Number (MPN) and the Receive Interrupt Node Pointer (RXINP) or the Transmit Interrupt Node Pointer (TXINP).

16. CAN node according to Claim 15,
**characterized in that**
the determination means are designed to make it dependent on the content of further control data items (MPSEL) whether the determination of the location within the memory device to which the information to be written to the memory device is written is carried out taking account solely of the Message Pending Number (MPN) or taking account of both the Message Pending Number (MPN) and the Receive Interrupt Node Pointer (RXINP) or the Transmit Interrupt Node Pointer (TXINP).

17. CAN node according to Claim 16,
**characterized in that**
the further control data (MPSEL) is global control data which is not associated with one specific message object, but applies to all the message objects.

18. CAN node according to Claim 1,
**characterized in that**
the determination means are designed to define, as a function of the further control data (MPSEL) and taking account of which parts of the Message Pending Number (MPN) and which parts of the Receive Interrupt Node Pointer (RXINP) or of the Transmit Interrupt Node Pointer (TXINP), the location within the memory device is determined to which the information to be written to the memory device is written.

19. CAN node according to Claim 1,
**characterized in that**
the memory device is split into a large number of memory areas, and **in that** the control data, taking account of which the determination means determine the location within the memory device to which the information to be written to the memory device is written, are designed such that the message objects whose writing or reading results in the emission of the same interrupt request are assigned locations located within the same memory device area.

20. CAN node according to Claim 1,
**characterized in that**
the CAN node is a programmable unit.

21. CAN node according to Claim 1,
**characterized in that**
the CAN node is a component of a programmable unit.

22. CAN node according to Claim 1,
**characterized in that**
the control data, taking account of which the determination means determine the location within the memory device to which the information to be written to the memory device is written, is written to the CAN controller by the CPU of the programmable unit.

23. CAN node according to Claim 1,
**characterized in that**
the memory device is formed by a RAM or a part of a RAM that is provided in the CAN controller.

## Revendications

1. Noeud CAN comprenant un contrôleur de CAN relié à un bus CAN,
- le contrôleur de CAN contenant une pluralité d'objets messages
- pour l'enregistrement temporaire des données à délivrer sur le bus CAN et/ou
- pour l'enregistrement temporaire des données transmises sur le bus CAN et requises par le noeud CAN et
- le contrôleur de CAN contenant des moyens de génération de demande d'interruption par le biais desquels une demande d'interruption est générée après la délivrance sur le bus CAN des données enregistrées dans un objet message et/ou après l'enregistrement des données reçues par le biais du bus CAN, et contenant des moyen de consignation d'information par le biais desquels une information est consignée dans un dispositif de mémorisation à partir de laquelle il est possible de déterminer l'objet message pour lequel il faut exécuter la routine de service d'interruption lancée par la demande d'interruption,
**caractérisé en ce**
- **que** les données de commande enregistrées dans le contrôleur de CAN permettent de définir l'emplacement au sein du dispositif de mémorisation où sera inscrite l'information à consigner dans le dispositif de mémorisation,
- **que** des moyens de détermination sont prévus par le biais desquels est déterminé, en tenant compte des données de commande, l'emplacement au sein du dispositif de mémorisation où sera inscrite l'information à consigner dans le dispositif de mémorisation, et
- **que** les données de commande sont approvisionnées de telle sorte que les moyens de détermination définissent les emplacements au sein du dispositif de mémorisation où sera inscrite l'information à consigner dans le dispositif de mémorisation de telle sorte que les moyens de consignation d'information consignent dans le dispositif de mémorisation les informations à consigner dans celui-ci et qui se rapportent aux objets messages après l'écriture ou la lecture desquels il faut exécuter la même routine de demande d'interruption en des emplacements disposés les uns à côté des autres ou proches les uns des autres au sein du dispositif de mémorisation.

2. Noeud CAN selon la revendication 1, **caractérisé en ce que** les données de commande sont enregistrées dans une mémoire non volatile ou dans une mémoire non volatile non programmable et peuvent être modifiées à tout moment par une réécriture de la mémoire.

3. Noeud CAN selon la revendication 1, **caractérisé en ce qu'**au moins une partie des données de commande sont des données de commande associées aux objets messages.

4. Noeud CAN selon la revendication 3, **caractérisé en ce que** des données de commande sont associées à chaque objet message et que les moyens de détermination sont conçus pour effectuer la détermination de l'emplacement au sein du dispositif de mémorisation où sera inscrite l'information à consigner dans le dispositif de mémorisation en tenant compte des données de commande qui sont associées à l'objet message dont la lecture ou l'écriture a entraîné la consignation de l'information dans le dispositif de mémorisation.

5. Noeud CAN selon la revendication 3, **caractérisé en ce que** les données de commande associées aux objets messages sont enregistrées dans les objets messages auxquels elles sont associées.

6. Noeud CAN selon la revendication 5, **caractérisé en ce que** les données de commande enregistrées dans les objets messages sont enregistrées dans les zones des objets messages qui ne sont pas réécrites par les données à enregistrer temporairement dans les objets messages.

7. Noeud CAN selon la revendication 4, **caractérisé en ce que** les données de commande associées à chaque objet message comprennent à chaque fois un numéro de message en attente (MPN).

8. Noeud CAN selon la revendication 7, **caractérisé en ce que** les moyens de détermination sont conçus pour effectuer la détermination de l'emplacement au sein du dispositif de mémorisation où sera inscrite l'information à consigner dans le dispositif de mémorisation en tenant compte uniquement du numéro de message en attente (MPN).

9. Noeud CAN selon la revendication 4, **caractérisé en ce que** les données de commande associées à chaque objet message comprennent à chaque fois un pointeur de noeud de réception d'interruption (RXINP) et/ou un pointeur de noeud d'émission d'interruption (TXINP) et que les moyens de détermination sont conçus pour effectuer la détermination de l'emplacement au sein du dispositif de mémorisation où sera inscrite l'information à consigner dans le dispositif de mémorisation en tenant compte du pointeur de noeud de réception d'interruption (RXINP) ou du pointeur de noeud d'émission d'interruption (TXINP).

10. Noeud CAN selon la revendication 9, **caractérisé en ce que** les moyens de détermination sont conçus pour effectuer la détermination de l'emplacement au sein du dispositif de mémorisation où sera inscrite l'information à consigner dans le dispositif de mémorisation en tenant compte à la fois du numéro de message en attente (MPN) et du pointeur de noeud de réception d'interruption (RXINP) ou du pointeur de noeud d'émission d'interruption (TXINP).

11. Noeud CAN selon la revendication 9, **caractérisé en ce que** les moyens de détermination sont conçus pour effectuer la détermination de l'emplacement au sein du dispositif de mémorisation où sera inscrite l'information à consigner dans le dispositif de mémorisation en tenant compte du pointeur de noeud de réception d'interruption (RXINP) lorsque l'événement déclencheur de la consignation de l'information dans le dispositif de mémorisation est l'écriture des données reçues par le biais du bus CAN dans l'objet message.

12. Noeud CAN selon la revendication 9, **caractérisé en ce que** les moyens de détermination sont conçus pour effectuer la détermination de l'emplacement au sein du dispositif de mémorisation où sera inscrite l'information à consigner dans le dispositif de mémorisation en tenant compte du pointeur de noeud d'émission d'interruption (TXINP) lorsque l'événement déclencheur de la consignation de l'information dans le dispositif de mémorisation est la délivrance sur le bus CAN des données enregistrées dans l'objet message.

13. Noeud CAN selon la revendication 9, **caractérisé en ce que** les moyens de génération de demande d'interruption sont conçus pour déterminer la demande d'interruption qui est générée après l'inscription des données transmises sur le bus CAN dans l'objet message auquel est associé le pointeur de noeud de réception d'interruption (RXINP) en tenant compte du pointeur de noeud de réception d'interruption (RXINP).

14. Noeud CAN selon la revendication 9, **caractérisé en ce que** les moyens de génération de demande d'interruption sont conçus pour déterminer la demande d'interruption qui est générée après la délivrance sur le bus CAN des données enregistrées dans l'objet message auquel est associé le pointeur de noeud d'émission d'interruption (TXINP) en tenant compte du pointeur de noeud d'émission d'interruption (TXINP).

15. Noeud CAN selon les revendications 8 et 10, **caractérisé en ce que** les moyens de détermination sont conçus pour effectuer la détermination de l'emplacement au sein du dispositif de mémorisation où sera inscrite l'information à consigner dans le dispositif de mémorisation en tenant compte, au choix, uniquement du numéro de message en attente (MPN), ou en tenant compte à la fois du numéro de message en attente (MPN) et du pointeur de noeud de réception d'interruption (RXINP) ou du pointeur de noeud d'émission d'interruption (TXINP).

16. Noeud CAN selon la revendication 15, **caractérisé en ce que** les moyens de détermination sont conçus pour rendre dépendant du contenu d'autres données de commande (MPSEL) si la détermination de l'emplacement au sein du dispositif de mémorisation où sera inscrite l'information à consigner dans le dispositif de mémorisation s'effectue en tenant compte uniquement du numéro de message en attente (MPN) ou en tenant compte à la fois du numéro de message en attente (MPN) et du pointeur de noeud de réception d'interruption (RXINP) ou du pointeur de noeud d'émission d'interruption (TXINP).

17. Noeud CAN selon la revendication 16, **caractérisé en ce que** les autres données de commande (MPSEL) sont des données de commande globales qui ne sont pas associées à un objet message donné, mais qui s'appliquent à tous les objets messages.

18. Noeud CAN selon la revendication 1, **caractérisé en ce que** les moyens de détermination sont conçus pour déterminer en fonction des autres données de commande (MPSEL), en tenant compte des parties du numéro de message en attente (MPN) et des parties du pointeur de noeud de réception d'interruption (RXINP) ou du pointeur de noeud d'émission d'interruption (TXINP), l'emplacement au sein du dispositif de mémorisation où sera inscrite l'information à consigner dans le dispositif de mémorisation.

19. Noeud CAN selon la revendication 1, **caractérisé en ce que** le dispositif de mémorisation est divisé en une pluralité de zones de mémorisation et que les données de commande, à l'aide desquelles les moyens de détermination déterminent l'emplacement au sein du dispositif de mémorisation où sera inscrite l'information à consigner dans le dispositif de mémorisation, sont approvisionnées de telle sorte que les objets messages dont l'écriture ou la lecture a pour conséquence la délivrance de la même demande d'interruption sont affectés aux emplacements qui se trouvent dans la même zone du dispositif de mémorisation.

20. Noeud CAN selon la revendication 1, **caractérisé en ce que** le noeud CAN contient une unité commandée par programme.

21. Noeud CAN selon la revendication 1, **caractérisé en ce que** le noeud CAN fait partie d'une unité commandée par programme.

22. Noeud CAN selon la revendication 1, **caractérisé en ce que** les données de commande, à l'aide desquelles les moyens de détermination déterminent l'emplacement au sein du dispositif de mémorisation où sera inscrite l'information à consigner dans le dispositif de mémorisation, sont écrites dans le contrôleur de CAN par la CPU de l'unité commandée par programme .

23. Noeud CAN selon la revendication 1, **caractérisé en ce que** le dispositif de mémorisation est formé par une RAM ou une partie d'une RAM prévue dans le contrôleur de CAN.
